# EUROPEAN PATENT SPECIFICATION

(11) **EP 3 882 458 B1**
(45) Date of publication and mention of the grant of the patent: **24.04.2024**
(21) Application number: 20163542.2
(22) Date of filing: 17.03.2020
(51) Int. Cl.: F03D 13/10, F03D 13/40

(54) **METHOD FOR HANDLING A SECTION OF A WIND TURBINE, TOOL FOR ATTACHING A SECTION TO A HANDLING DEVICE AND TRANSPORTATION VEHICLE**
VERFAHREN ZUR HANDHABUNG EINES ABSCHNITTS EINER WINDTURBINE, WERKZEUG ZUR BEFESTIGUNG EINES ABSCHNITTS AN EINER HANDHABUNGSVORRICHTUNG UND TRANSPORTFAHRZEUG
PROCÉDÉ DE MANIPULATION D'UNE SECTION D'UNE ÉOLIENNE, OUTIL DE FIXATION D'UNE SECTION À UN DISPOSITIF DE MANIPULATION ET VÉHICULE DE TRANSPORT

(43) Date of publication of application: 22.09.2021
(73) Proprietor: Siemens Gamesa Renewable Energy A/S, 7330 Brande (DK)
(72) Inventor: Soerensen, Johnny, 6920 Videbæk (DK)
(74) Representative: SGRE-Association

(56) References cited:
- US-A1- 2018 209 225
- Ihc: "No limits No boundaries", , 31 December 2014 (2014-12-31), XP055728719, Retrieved from the Internet: URL:http://greenglobalgroup3g.com/images/s ampledata/parks/landscape/IHCHandlingSyste msproductoverview.pdf [retrieved on 2020-09-08]

## Description

The invention concerns a method for handling a section of a wind turbine. The invention also concerns a tool for attaching a hollow section of a wind turbine to a handling device, especially a transportation vehicle and a transportation vehicle.

One of the challenges in constructing large scale wind turbines is the handling of typically long vertical sections of the wind turbine that are open on both ends e.g. tower sections or a monopile. Typically, such long sections comprise a flange at each end to connect them to other sections of the wind turbine. These flanges can also be used to attach the respective section to a transport, a crane or other handling tools.

In some approaches to tower construction it is not necessary to provide flanges on both ends or on any end of the respective section. It is e.g. possible to use welding to connect different sections of the wind turbine instead of a flange connection. Another approach for connecting vertical sections of a wind turbine are so-called slip joints in which a lower opening of an upper section has a slightly larger diameter than the top diameter of a lower section. The upper section can therefore be slipped upon the lower section and is held at a certain height due to the conical shape of the section or additional constraints in the inner diameter. Examples of such slip joints are e.g. known from the documents EP 2910686 A2 and EP 3255210 A2. Another document showing relevant prior art is US2018209225 A1.

When a flange is not necessary for connecting different sections of the wind turbine it would be disadvantageous to include such a flange only for handling purposes, since such a flange will increase the weight of the respective section and its material requirements. It is therefore the purpose of the present invention to provide an approach for handling sections of the wind turbine that do not have a flange on both ends.

This problem is solved by a method for handling a section of a wind turbine, comprising the steps:
- Inserting an inner part of a first tool into an open first end of the section and/or inserting the first end of the section into an outer part of the first tool,
- actuating the first tool to exert pressure onto an inner surface and/or an outer surface of a wall of the section along the entire circumference or in multiple areas spaced along the circumference of the wall, and
- moving the first tool while the first tool is exerting the pressure on the inner and/or outer surface to move the section.

The inventive method is based on the idea of applying pressure at the inner and/or outer surface of a wall of the section to on the one hand block a movement of the section in the radial direction and on the other hand use friction to avoid a slipping of the section in the longitudinal direction of the section by applying pressure along the circumference. It is also possible to reduce the risk of ovalization of hollow long sections when they are transported or stored while lying horizontally. In hollow sections comprising flanges, the flanges help to reduce the risk of such an ovalization. If there are no flanges present, the tool used in the inventive method helps to reduce the risk of ovalization.

It can be sufficient to use one tool to handle the section, e.g. when the section has a flange on the other end or when the forces exerted on the section in the longitudinal direction are limited, e.g. by only using movement in the radial direction or by strongly limiting accelerations along the longitudinal direction. If its necessary to handle both ends of such a section, a second tool can be used as discussed below.

The section can e.g. be a section of the tower or a monopile or a section of a monopile. The section can have a tubular or especially conical shape. Alternatively, it would e.g. be possible to provide a section with the shape of an extruded polygon, especially with rounded corners.

The pressure is preferably applied in such a way that it mainly acts in the radial direction or approximately orthogonal to the wall. It should especially be avoided to push the section away from the tool.

In many cases it will be sufficient to only apply pressure either to the inner surface or to the outer surface. An application of pressure to both surfaces can especially be advantageous when the section has a relatively thin wall and the pressure is applied to areas spaced along the circumference of the wall in relatively large distances. Applying pressure only to the inner surface or only to the outer surface might lead to a deformation of the section in these cases which can be avoided when pressure is applied to both surfaces.

The direction of the section of the wind turbine that will be vertical once the wind turbine is erected and along which the section is typically longer than in the other directions will be referred to as the axial or longitudinal direction. Even when the section does not have a strictly tubular or conical shape, labels for directions applying to such shapes will be used. The circumferential direction will therefore extend orthogonal to the longitudinal direction along the wall of the section and the radial direction will extend orthogonal to the circumferential and the longitudinal direction.

Prior to moving the first tool, an inner part of a second tool can be inserted into an open second end of the section and/or the second end of the section can be inserted into an outer part of the second tool and the second tool can be actuated to exert pressure onto an inner surface and/or an outer surface of the wall of the section along the entire circumference or in multiple areas spaced along the circumference of the wall. In other words, the open second end is attached to the second tool using the same approach that is used for attaching the open first end to the first tool. This can be used to support the section during a single movement by both tools.

Preferably, the first and second tool can be moved collectively, therefore minimizing forces exerted along the connection between the open ends. In the simplest case, this is achieved by attaching the first and the second tool to the same handling device, e.g. to the same transportation vehicle. It is, however, also possible to use different handling devices, e.g. different self-propelled modular transporters (SPMT), to carry the first and second tool and to coordinate a movement of these handling devices. Alternatively, it would e.g. be possible to only actively move the first tool and to move the second tool by transmitting a force via the section from the first tool to the second tool.

The section can extend horizontally between the first and second end during the movement of the section. The weight of the section will therefore act as a radial force on the first and/or second tool. In this direction the inner and/or outer part of the first and/or second tool can provide a positive fit for the respective open end, while forces along the longitudinal direction would possibly have to be counteracted by the friction caused by the pressure. Therefore, moderate levels of pressure and therefore frictions can be sufficient to transport the section along the longitudinal direction. The transport can preferably be along an essentially horizontal path and can e.g. be performed by a transportation vehicle.

The transport can optionally incorporate a vertical movement, e.g. to lift the section vertically after the actuation of the first and/or second tool to raise the section from an initial pickup position to a higher transport position or vice versa.

The first and/or second tool can be attached to a transportation vehicle or to a respective transportation vehicle used to move the section along a transport path. The transportation vehicle or the respective transportation vehicle can e.g. be a self-propelled modular transporter (SPMT). A SPMT is formed by a platform comprising a multitude of wheels that are attached to especially individually controllable axels. SPMTs are common tools for heavy duty transport and wind turbine construction. Typically, sections of a wind turbine are attached via flanges to such transporters. By attaching the discussed tool to such a transporter, a similar approach to transportation can be used even for sections without flanges. Attaching the first and second tool to different transportation vehicles can be advantageous, since a section of a wind turbine can be very long and therefore a very long transportation vehicle would be required if both tools should be attached to the same transportation vehicle. The movement of the transportation vehicles that carry the respective tool can preferably be automatically synchronized to avoid an exertion of large forces on the interconnection between the respective tool and on the section.

The inventive method uses a tool according to the present invention that will be described in more detail below. Features described with respect to this tool, especially features concerning the actuation of the tool and ways to exert pressure by the respective tool, can be transferred to the inventive method with the described advantages and vice versa.

As mentioned, the invention concerns a tool for attaching a section of a wind turbine to a handling device, especially a transportation vehicle, wherein the tool comprises:
- a connecting section connected or connectable to the handling device,
- an inner part designed to be inserted into an open end of the section and/or an outer part designed to receive the end of the section, and
- one actuator or multiple actuators designed to move and/or deform at least one component of the tool to exert pressure onto an inner surface and/or an outer surface of a wall of the section along the entire circumference or in multiple areas spaced along the circumference of the wall.

Two of these tools can be used to handle a section of the wind turbine. One tool can be attached to each open end of such a section. Alternatively, it is possible to use two separate handling devices, each using one of the tools, to collectively handle the section, e.g. to use separate SPMTs as discussed above.

When the tool is used to apply pressure to multiple areas spaced along the circumference, pressure is preferably applied in at least three distinct areas along the circumference. Preferably, the areas are equally spaced along the circumference.

The tool further comprises a respective air cushion extending along the outer circumference of the inner part and/or along the inner circumference of the outer part of the tool or at least one air cushion extending along a respective section of the inner and/or outer circumference, wherein the actuator or at least one of the actuators is designed to inflate the air cushion or cushions. By inflating a respective air cushion, the air cushion expands between the outer circumference of the inner part of the tool and the inner surface of the wall of the section or between the inner circumference of the outer part of the tool and the outer surface of the wall of the section. Once the air cushion contacts the respective surface of the wall, a further increase of air pressure within the air cushion will exert pressure on the surface of the wall. Using an air cushion to exert pressure allows for applying an approximately equal amount of pressure to a relatively large area of the surface by simple technical means.

The respective air cushion can be attached to an inner or outer circumference of a support structure of the tool, wherein the tool comprises a mechanism for modifying the diameter of that circumference. An air cushion attached to the outer part of the tool will typically be attached to an inner circumference of a support structure and an air cushion of an inner part of the tool will typically be attached to the outer circumference of a support structure. Therefore, by inflating the respective air cushion, pressure can be applied between the respective support structure and the respective surface of the wall of the section.

Using a support structure with a diameter that can be modified by the discussed mechanism is advantageous and allows for an adjustment of the used circumference to the circumference of the section of the wind turbine to be handled. Even when only transporting different sections of the same wind turbine, such an adjustable diameter can be advantageous, since the diameters of the open ends of the respective sections typically vary along the lengths of the tower of the wind turbine due to a conical or similar shape of the wind turbine tower. An adjustable diameter of the support structure also allows for using the same tool to transport sections of wind turbines with different diameters. It is e.g. possible to adjust the diameter of the support structure in such a way, that the inner or outer diameter of the wall of the section is only approximately 10% different to that diameter. This relatively small difference in diameter can then be easily compensated by inflating the air cushion. It is e.g. possible to allow for a variation of the diameter of the support structure by several meters, e.g. between 7.5m and 10m, and to only use an increase of an outer diameter or a decrease of an inner diameter by an air cushion of e.g. 1m or 0.5m.

The mechanism for modifying the diameter can allow for a manual adjustment of a diameter, e.g. by shifting and attaching various parts of the support structure in different positions. Preferably, the diameter of the support structure can be changed by using at least one further actuator. This e.g. allows for an adjustment of the diameter by a remote control, by automatically recognizing a diameter of an open end of a section and automatically adjusting the diameter of the support structure, e.g. by processing video images, or by similar, at least semi-automated approaches for adjusting the diameter.

The tool can comprise multiple movable yaws distributed along an outer circumference of the inner part and/or an inner circumference of the outer part of the tool, wherein the activation of the actuator or at least one of the actuators shifts the movable yaws radially outwards or inwards. The shape of the yaws can be adjusted to an expected shape of the wall of the section. It is also possible to provide the yaw with an elastic surface, an air cushion or similar means that can contact the wall of the section and follow the shape of the wall.

The outermost points or innermost points of the yaws can be considered to define a polygon. The circumference that should be matched to the inner or outer circumference of the wall of the section to exert pressure on the wall can then be the circumscribed circle of this polygon. A radial movement of the yaws can be a movement orthogonal to this circumference or generally to the wall to be contacted.

Preferably the yaws are evenly distributed along the circumference. Advantageously, at least three or at least four yaws are used. The movement of the yaws can be a linear shift, e.g. by a piston, or the yaws can be attached to a mechanism that is pivoted. An actuator used to move the yaws can be a pneumatic, hydraulic or electromechanical actuator.

The tool can comprise multiple fixed yaws, each forming a vice in conjunction with one of the moveable yaws to clamp the wall of the tower section. While it is typically sufficient to only apply pressure to the inner or outer surface of the wall of the section to reliably handle the section, an exertion of pressure in relatively small and relatively few areas along the circumference of the wall might lead to a deformation of the section when the wall of the section is formed from relatively soft material and/or has a relatively low thickness. By using additional fixed yaws, pressure is applied to the wall from both sides and a deformation can be avoided or at least reduced.

Preferably, the tool comprises a stop designed to limit the depths of the insertion of the inner part of the tool into the tower section and/or the insertion of the tower section into the outer part of the tool. Preferably, a ring-shaped stop can be used. It is also possible to use a multitude of stops that are distributed along the circumference of the tool. The use of such a stop on the one hand allows for an easier alignment of the tool in the correct position for attaching the tool to the section. On the other hand, the stop axially supports the section during the handling of the section. If tools are attached to two open ends of a section, forces exerted along a connecting line between these ends can be completely or at least largely absorbed by these stops.

The invention also concerns a transportation vehicle for transporting a section of a wind turbine that comprises at least one tool according to the present invention. The tool can e.g. be permanently fixed to the transportation vehicle.

Alternatively, a removable tool can be used, e.g. when the same tool should be used for handling the section prior to the transport or after the transport, e.g. by a crane. It can also be advantageous to leave the tool attached to the section during a storage of the section, e.g. to avoid a deformation of the section.

The transportation vehicle can comprise two of the tools, which allows for an attachment of a respective tool to each of the open ends of the section and therefore for a more robust handling of the section. Alternatively, the transport of the section can be performed by using two separate transportation vehicles, e.g. SPMTs as discussed above, each comprising a single tool for handling the section.

The transportation vehicle can comprise a lifting mechanism for vertically lifting the tool and therefore the section of the wind turbine from a loading position to a transport position used during transport. It is e.g. possible to connect the tool or tools to the section while the section is stored at a relatively low position. To avoid a contact of the section with obstacles during the transport, it can then be lifted from this position after connecting the tool or tools to the section. Once the transport is finished, the section can e.g. be lowered again to position it on a provided support structure.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a pair of transportation vehicles according to an embodiment of the present invention, each comprising an embodiment of a tool according to the present invention and used to perform a method for handling a section of a wind turbine according to the present invention,
- Fig. 2: a different view of the tool used in fig. 1,
- Figs. 3-5: alternative embodiments of tools that could be used instead of the tool shown in fig. 1 and 2, and
- Fig. 6: the use of one of the tools shown in fig. 1 in a further embodiment of the method for handling a section of a wind turbine according to the present invention.

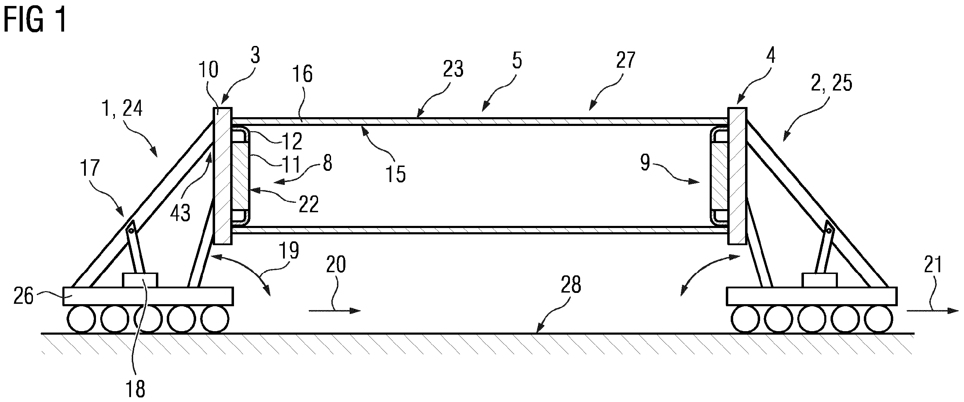

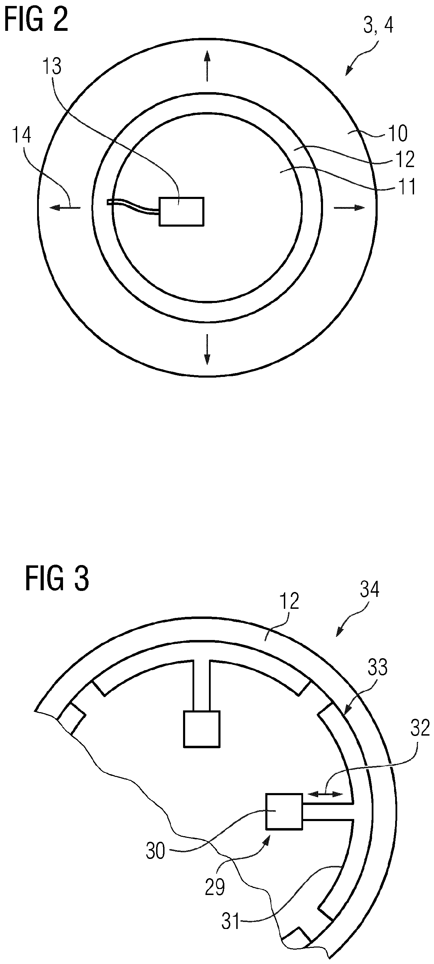

Fig. 1 shows an example of handling and especially transporting a section 5 of a wind turbine, in the example a section of the wind turbine tower, using two transportation vehicles 1, 2 with attached tools 3, 4. The section 5 can e.g. be designed to be attached to further sections of the wind turbine via a slip joint connection or by welding. Therefore, the section does not comprise any flanges that can be used for attaching the section 5 to the transport vehicles 1, 2. Therefore, each of the transportation vehicles 1, 2 is provided with a tool 3, 4, that is also shown in a different perspective in fig. 2, for securely attaching the transportation vehicle 1, 2 to the section 5.

To reliably handle the section 5, the tools 3, 4 are attached to the section 5 by inserting a respective inner part 22 of the respective tool 3, 4 into the respective open end 8, 9 of the section 5. Once the inner part 22 is inserted into the respective open end 8, 9 the respective tool 3, 4 is actuated to exert a pressure onto an inner surface 15 of a wall 16 of the section 5. In the example, the pressure is exerted along the entire circumference. This is achieved by using a support structure 11 with a smaller diameter than the inner diameter of the wall 16 and using an actuator 13 to inflate an air cushion 12 attached to the outer circumference of this support structure 11.

As is schematically shown in fig. 2 by the arrows 14 the air cushion therefore extends in the radial direction, contacts the inner surface 15 of the wall 16 and exerts a pressure on this inner surface 15. This creates a positive fit of the respective tool 3, 4 and the section 5 in the radial direction. A shift of the section 5 in the longitudinal direction is supressed by the friction between the air cushion 12 and the wall 16 of the section 5.

To further ensure that there is no undesired relative movement between the tools 3, 4 and the section 5, the tools 3, 4 preferably comprise a stopper 10 that is ring-shaped in the example. Even the use of one of these tools 3, 4, especially the use of both tools 3, 4 therefore allows for a robust handling of a hollow section 5 of a wind turbine, even when the section 5 does not provide any flanges or other means for attaching this section 5 to a handling device, especially a transportation vehicle. The tools 3, 4 are then attached to the respective vehicle 1, 2 by a connecting section 43.

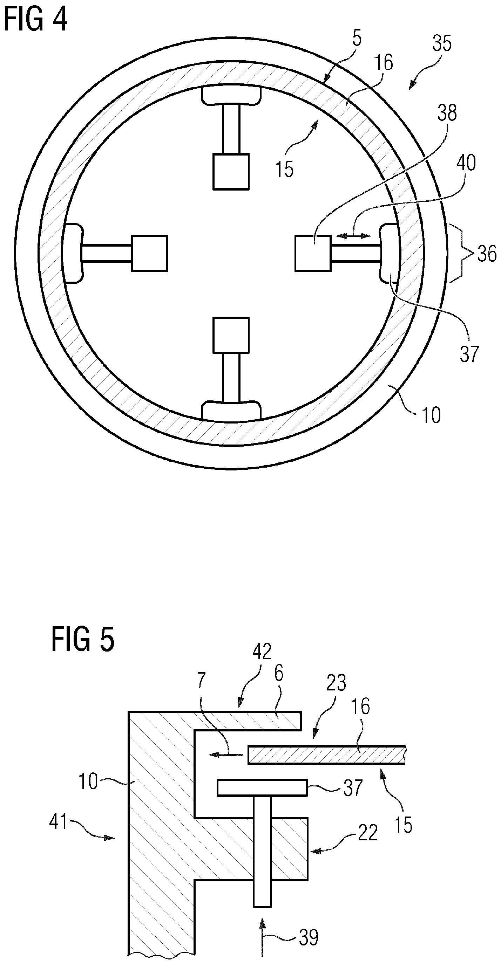

In most of the discussed examples, the fixation of the section 5 in the radial direction will be achieved by exerting pressure on the inner surface 15 of the section 5. Additionally or alternatively, it would be possible, to provide this function by using an outer section of the tool 3, 4, into which the section is inserted. The respective tool 3, 4 can then be actuated to exert pressure on the outer surface 23 of the wall 16. An example in which both an inner and an outer section 22, 42 of a tool 41 are used will be discussed later with reference to fig. 5. It would also be possible to only exert pressure from the outer surface. This would e.g. be possible by using a support structure that surrounds the wall 16 of the section once the section 5 is inserted into the outer part of the tool 3, 4 and inflating at least one air cushion arranged between this support structure and the wall 16.

Once the tools 3, 4 are attached to the section 5, the section 5 can be handled by the transportation vehicles 1, 2 or more generally by any handling device 24, 25 attached to the respective tool 3, 4. In the example, the transportation vehicles 1, 2 are SPMTs, that are commonly used to transport heavy loads. The tools 3, 4 are attached to a base 26 of the transportation vehicles 1, 2 via a lifting mechanism 17 with an actuator 18 that allows for raising and lowering the tools 3, 4 as indicated by the arrow 19. It is therefore e.g. possible to pick up a section stored at a relatively low vertical position by first arranging the transportation vehicles 1, 2 in a relatively large distance and moving the tools 3, 4 downward by the lifting mechanism 17. The tools 3, 4 can then be attached to the section 5 as discussed above and then the lifting mechanism 17 can be actuated while at the same time reducing the distance between the transportation vehicles 1, 2 to move the section 5 in the transport position 27 shown in fig. 1. As indicated by the arrows 20, 21, the transportation vehicles 1, 2 can then be collectively controlled to move with the same speed and in the same direction to transport the section 5 along the transport path 28. Once a destination is reached, the section can then be lowered and decoupled using the same steps in reverse.

When conical sections are used to e.g. construct the tower of a wind turbine, the diameters of the open ends 8, 9 of a section 5 can be different. Typically, a single wind turbine also uses sections with different diameters. It would also be preferable to use the same tools 3, 4 to handle sections 5 of different wind turbines that might have sections 5 with different diameters. While slight variations in the diameter can be compensated by using a different inflation of the air cushion 12 of the tools 3, 4 shown in fig. 1, for a stronger variation of usable diameters it can be advantageous to replace the fixed support structure 11 shown in fig. 1 by a variable support structure 29 shown in fig. 3. In this example, the outer circumference 33 of the support structure 29 to which the air cushion 12 is attached is defined by the positions of several sections 31, that can be moved radially as indicated by the arrow 32 via a respective mechanism 30, e.g. an actuator moving a piston. When such a tool 34 is used to handle a section 5, the sections 31 can first be adjusted to provide a diameter of the circumference 33 that is a bit smaller than the inner diameter on the respective open end 8, 9 of the section 5, e.g. by 10%. The inner part of the tool 34 comprising the support structure 29 and the air cushion 12 can then be inserted into the respective open end 8, 9 and the air cushion 12 can be inflated as discussed above. Therefore, the tool 34 can be used to handle sections 5 with different diameters.

Fig. 4 shows an alternative embodiment of a tool 35 for handling the section 5 that uses movable yaws 37 distributed along an outer circumference of the inner part instead of an air cushion as discussed above. The yaws 37 are attached to the stopper 10 that is arranged outside the section by actuators 38 that can radially move the yaws 37 as indicated by the arrow 40. The yaws 37 are first positioned radially inwards, then the inner part of the tool 35 is inserted into the open end 8, 9 of the section 5 and then the yaws 37 are moved radially outward by the actuators 38. The yaws 37 therefore exert pressure on the inner surface 15 of the wall 16 of the section 5 in multiple areas spaced along the circumference of the wall 16.

When pressure is applied on the wall only from one side and in multiple distinct areas spaced along the circumference of the wall 16, a deformation of the wall 16 might result if the strength of the wall 16 is low. To avoid such a deformation, it can be advantageous to apply pressure to the inner surface 15 and to the outer surface 23 of the wall 16. A simple example for a tool 41, that implements this feature, will now be discussed with reference to fig. 5. In this example the tool 41 comprises an outer part 42 and an inner part 22, that can e.g. both be attached to the stopper 10. The wall 16 of the section 5 is inserted between these parts as indicated by the arrow 7. In other words, the inner part 22 is inserted into the respective open end 8, 9 of the section 5 and the section 5 is inserted into the outer section 42.

The inner section comprises yaws 37 as already discussed with reference to fig. 4. The outer section 42 is formed by multiple fixed yaws 6, each forming a vice in conjunction with a respective movable yaw 37. Once the vice is closed by moving the movable yaw 37 as indicated by the arrow 39 pressure is exerted on both surfaces 15, 23 of the wall 16, therefore avoiding an undesired deformation of the wall 16.

The example according to fig. 5 could obviously be modified in a multitude of ways. It would e.g. be possible to use movable yaws 37 as part of the outer part 42 of the tool 41 and to use the fixed yaws 6 as inner part 22 of the tool 41. Alternatively, both parts 22, 42 could be formed by movable yaws 37. It would also be possible to use one or multiple inflatable air cushions 12, that were discussed with reference to figs. 1-3, instead of the movable yaws 37.

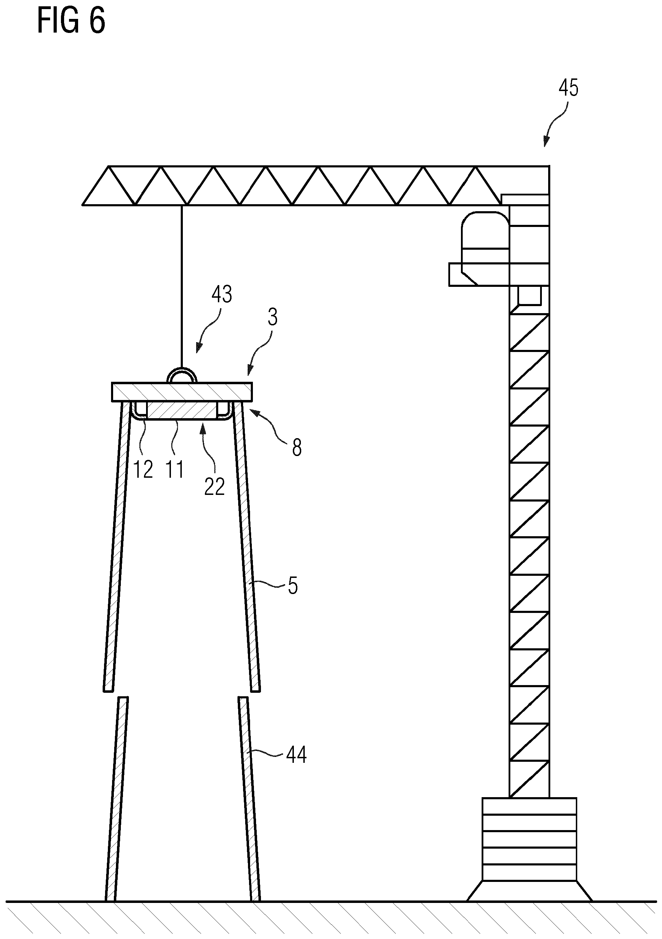

Fig. 6 shows another use for the tool 3 shown in fig. 1. Instead of attaching the tool 3 to the transportation vehicle 1, the connecting section 43 of the tool 3 is attached to a different handling device 45, namely a crane. By connecting the tool 3 to the section 5 as discussed with respect to figs. 1 and 2, the crane can be used to lift the section 5, even when the section 5 does not comprise a flange or other means for connecting the section 5 to the crane. The crane can then e.g. be used to lift the section 5 to connect it to a lower section 44 of a tower by a slip joint as shown in fig. 6.

Although the present invention has been described in detail with reference to the preferred embodiment, the present invention is not limited by the disclosed examples from which the skilled person is able to derive other variations without departing from the scope of the invention.

## Claims

1. Tool for attaching a section (5) of a wind turbine to a handling device (24, 25, 45), especially a transportation vehicle (1, 2), **characterized in that** the tool (3, 4, 34, 35, 41) comprises:
- a connecting section (43) connected or connectable to the handling device (24, 25, 45),
- an inner part (22) designed to be inserted into an open end (8, 9) of the section (5) and/or an outer part (42) designed to receive the end (8, 9) of the section (5), and
- one actuator (13, 38) or multiple actuators (13, 38) designed to move and/or deform at least one component of the tool (3, 4, 34, 35, 41) to exert pressure onto an inner surface (15) and/or an outer surface (23) of a wall (16) of the section (5) along the entire circumference or in multiple areas (36) spaced along the circumference of the wall (16),
**characterized in that** the tool (3, 4, 34, 35, 41) comprises a respective air cushion (12) extending along the outer circumference of the inner part (22) and/or along the inner circumference of the outer part (42) of the tool (3, 4, 34, 35, 41) or at least one air cushion (12) extending along a respective section of the inner and/or outer circumference, wherein the actuator (13, 38) or at least one of the actuators (13, 38) is designed to inflate the air cushion (12) or cushions (12).

2. Tool according to claim 1, **characterized in that** the respective air cushion (12) is attached to an inner or outer circumference (33) of a support structure (29) of the tool (3, 4, 34, 35, 41), wherein the tool (3, 4, 34, 35, 41) comprises a mechanism (30) for modifying the diameter of that circumference (33).

3. Tool according to one of the preceding claims, **characterized in that** it comprises multiple moveable yaws (37) distributed along an outer circumference of the inner part (22) and/or an inner circumference of the outer part (42) of the tool (3, 4, 34, 35, 41), wherein an activation of the actuator (13, 38) or at least one of the actuators (13, 38) shifts the moveable yaws (37) radially outwards or inwards.

4. Tool according to claim 3, **characterized in that** the tool (3, 4, 34, 35, 41) comprises multiple fixed yaws (6), each forming a vice in conjunction with one of the moveable yaws (37) to clamp the wall (16) of the section (5) .

5. Tool according to one of the preceding claims, **characterized in that** it comprises a stop (10) designed to limit the depth of the insertion of the inner part (22) of the tool (3, 4, 34, 35, 41) into the section (5) and/or of the insertion of the section (5) into the outer part (42) of the tool (3, 4, 34, 35, 41).

6. Transportation vehicle for transporting a section (5) of a wind turbine, **characterized in that** in comprises at least one tool (3, 4, 34, 35, 41) according to one of the preceding claims.

7. Transportation vehicle according to claim 6, **characterized in that** it comprises a lifting mechanism (17) for vertically lifting the tool (3, 4, 34, 35, 41) and therefore the section (5) of the wind turbine from a loading position to a transport position (27) used during the transport.

8. Method for handling a section (5) of a wind turbine, comprising the steps:
- Inserting an inner part (22) of a first tool (3, 4, 34, 35, 41) into an open first end (8, 9) of the section (5) and/or inserting the first end (8, 9) of the section (5) into an outer part (42) of the first tool (3, 4, 34, 35, 41),
- actuating the first tool (3, 4, 34, 35, 41) to exert pressure onto an inner surface (15) and/or an outer surface (23) of a wall (16) of the section (5) along the entire circumference or in multiple areas (36) spaced along the circumference of the wall (16), and
- moving the first tool (3, 4, 34, 35, 41) while the first tool (3, 4, 34, 35, 41) is exerting the pressure on the inner and/or outer surface (15, 23) to move the section (5),
**characterized in that** a tool according to one of the claims 1 to 5 is used as the first tool (3, 4, 34, 35, 41) .

9. Method according to claim 8, **characterized in that** prior to moving the first tool (3, 4, 34, 35, 41), an inner part (22) of a second tool (3, 4, 34, 35, 41) is inserted into an open second end (8, 9) of the section (5) and/or the second end (8, 9) of the section (5) is inserted into an outer part (42) of the second tool (3, 4, 34, 35, 41) and the second tool (3, 4, 34, 35, 41) is actuated to exert pressure onto an inner surface (15) and/or an outer surface (23) of the wall (16) of the section (5) along the entire circumference or in multiple areas (36) spaced along the circumference of the wall (16).

10. Method according to claim 9, **characterized in that** the section (5) extends horizontally between the first and second end (8, 9) during the movement of the section (5).

11. Method according to one of the claims 8 to 10, **characterized in that** the first and/or second tool (3, 4, 34, 35, 41) are attached to a transportation vehicle (1, 2) or to a respective transportation vehicle (1, 2) used to move the section (5) along a transport path (28).

## Patentansprüche

1. Werkzeug zum Anbringen eines Abschnitts (5) einer Windkraftanlage an einer Handhabungsvorrichtung (24, 25, 45), insbesondere einem Transportfahrzeug (1, 2), **dadurch gekennzeichnet, dass** das Werkzeug (3, 4, 34, 35, 41) Folgendes umfasst:
- einen Verbindungsabschnitt (43), der mit der Handhabungsvorrichtung (24, 25, 45) verbunden oder verbindbar ist,
- einen inneren Teil (22), der dazu ausgestaltet ist, in ein offenes Ende (8, 9) des Abschnitts (5) eingesetzt zu werden, und/oder einen äußeren Teil (42), der dazu ausgestaltet ist, das Ende (8, 9) des Abschnitts (5) aufzunehmen, und
- einen Aktuator (13, 38) oder mehrere Aktuatoren (13, 38), die dazu ausgestaltet sind, mindestens eine Komponente des Werkzeugs (3, 4, 34, 35, 41) zu bewegen und/oder zu verformen, um Druck auf eine Innenfläche (15) und/oder eine Außenfläche (23) einer Wand (16) des Abschnitts (5) entlang des gesamten Umfangs oder in mehreren entlang des Umfangs der Wand (16) beabstandeten Bereichen (36) auszuüben,
**dadurch gekennzeichnet, dass** das Werkzeug (3, 4, 34, 35, 41) ein jeweiliges Luftpolster (12), das sich entlang des Außenumfangs des inneren Teils (22) und/oder entlang des Innenumfangs des äußeren Teils (42) des Werkzeugs (3, 4, 34, 35, 41) erstreckt, oder mindestens ein Luftpolster (12), das sich entlang eines jeweiligen Abschnitts des Innen- und/oder Außenumfangs erstreckt, umfasst, wobei der Aktuator (13, 38) oder mindestens einer der Aktuatoren (13, 38) dazu ausgestaltet ist, das Luftpolster (12) oder die Luftpolster (12) aufzublasen.

2. Werkzeug nach Anspruch 1, **dadurch gekennzeichnet, dass** das jeweilige Luftpolster (12) an einem Innen- oder Außenumfang (33) einer Stützstruktur (29) des Werkzeugs (3, 4, 34, 35, 41) angebracht ist, wobei das Werkzeug (3, 4, 34, 35, 41) einen Mechanismus (30) zum Modifizieren des Durchmessers des Umfangs (33) umfasst.

3. Werkzeug nach einem der vorhergehenden Ansprüche, **dadurch gekennzeichnet, dass** es mehrere bewegliche Backen (37) umfasst, die entlang eines Außenumfangs des inneren Teils (22) und/oder eines Innenumfangs des äußeren Teils (42) des Werkzeugs (3, 4, 34, 35, 41) verteilt sind, wobei eine Aktivierung des Aktuators (13, 38) oder mindestens eines der Aktuatoren (13, 38) die beweglichen Backen (37) radial nach außen oder nach innen verlagert.

4. Werkzeug nach Anspruch 3, **dadurch gekennzeichnet, dass** das Werkzeug (3, 4, 34, 35, 41) mehrere feststehende Backen (6) umfasst, die jeweils in Verbindung mit einer der beweglichen Backen (37) eine Schraubzwinge bilden, um die Wand (16) des Abschnitts (5) einzuspannen.

5. Werkzeug nach einem der vorhergehenden Ansprüche, **dadurch gekennzeichnet, dass** es einen Anschlag (10) umfasst, der dazu ausgestaltet ist, die Einsetztiefe des inneren Teils (22) des Werkzeugs (3, 4, 34, 35, 41) in den Abschnitt (5) und/oder die Einsetztiefe des Abschnitts (5) in den äußeren Teil (42) des Werkzeugs (3, 4, 34, 35, 41) zu begrenzen.

6. Transportfahrzeug zum Transportieren eines Abschnitts (5) einer Windkraftanlage, **dadurch gekennzeichnet, dass** es mindestens ein Werkzeug (3, 4, 34, 35, 41) nach einem der vorhergehenden Ansprüche umfasst.

7. Transportfahrzeug nach Anspruch 6, **dadurch gekennzeichnet, dass** es einen Hubmechanismus (17) zum vertikalen Anheben des Werkzeugs (3, 4, 34, 35, 41) und somit des Abschnitts (5) der Windkraftanlage von einer Ladeposition auf eine während des Transports verwendete Transportposition (27) umfasst.

8. Verfahren zum Handhaben eines Abschnitts (5) einer Windkraftanlage, umfassend die folgenden Schritte:
- Einsetzen eines inneren Teils (22) eines ersten Werkzeugs (3, 4, 34, 35, 41) in ein offenes erstes Ende (8, 9) des Abschnitts (5) und/oder Einsetzen des ersten Endes (8, 9) des Abschnitts (5) in einen äußeren Teil (42) des ersten Werkzeugs (3, 4, 34, 35, 41),
- Betätigen des ersten Werkzeugs (3, 4, 34, 35, 41), um Druck auf eine Innenfläche (15) und/oder eine Außenfläche (23) einer Wand (16) des Abschnitts (5) entlang des gesamten Umfangs oder in mehreren entlang des Umfangs der Wand (16) beabstandeten Bereichen (36) auszuüben, und
- Bewegen des ersten Werkzeugs (3, 4, 34, 35, 41), während das erste Werkzeug (3, 4, 34, 35, 41) den Druck auf die Innen- und/oder Außenfläche (15, 23) ausübt, um den Abschnitt (5) zu bewegen,
**dadurch gekennzeichnet, dass** ein Werkzeug nach einem der Ansprüche 1 bis 5 als das erste Werkzeug (3, 4, 34, 35, 41) verwendet wird.

9. Verfahren nach Anspruch 8, **dadurch gekennzeichnet, dass** vor Bewegen des ersten Werkzeugs (3, 4, 34, 35, 41) ein innerer Teil (22) eines zweiten Werkzeugs (3, 4, 34, 35, 41) in ein offenes zweites Ende (8, 9) des Abschnitts (5) eingesetzt wird und/oder das zweite Ende (8, 9) des Abschnitts (5) in einen äußeren Teil (42) des zweiten Werkzeugs (3, 4, 34, 35, 41) eingesetzt wird und das zweite Werkzeug (3, 4, 34, 35, 41) betätigt wird, um Druck auf eine Innenfläche (15) und/oder eine Außenfläche (23) der Wand (16) des Abschnitts (5) entlang des gesamten Umfangs oder in mehreren entlang des Umfangs der Wand (16) beabstandeten Bereichen (36) auszuüben.

10. Verfahren nach Anspruch 9, **dadurch gekennzeichnet, dass** sich der Abschnitt (5) während der Bewegung des Abschnitts (5) horizontal zwischen dem ersten und zweiten Ende (8, 9) erstreckt.

11. Verfahren nach einem der Ansprüche 8 bis 10, **dadurch gekennzeichnet, dass** das erste und/oder zweite Werkzeug (3, 4, 34, 35, 41) an einem Transportfahrzeug (1, 2) oder an einem jeweiligen Transportfahrzeug (1, 2) angebracht sind, das zum Bewegen des Abschnitts (5) entlang eines Transportwegs (28) verwendet wird.

## Revendications

1. Outil de fixation d'une section (5) d'une éolienne à un dispositif de manipulation (24, 25, 45), notamment un véhicule de transport (1, 2), **caractérisé en ce que** l'outil (3, 4, 34, 35, 41) comprend :
- une section de connexion (43) connectée ou pouvant être connectée au dispositif de manipulation (24, 25, 45),
- une partie interne (22) conçue pour être insérée dans une extrémité ouverte (8, 9) de la section (5) et/ou une partie externe (42) conçue pour recevoir l'extrémité (8, 9) de la section (5), et
- un actionneur (13, 38) ou plusieurs actionneurs (13, 38) conçus pour déplacer et/ou déformer au moins un composant de l'outil (3, 4, 34, 35, 41) pour exercer une pression sur une surface interne (15) et/ou une surface externe (23) d'une paroi (16) de la section (5) sur toute la circonférence ou dans de multiples zones (36) espacées le long de la circonférence de la paroi (16),
**caractérisé en ce que** l'outil (3, 4, 34, 35, 41) comprend un coussin d'air respectif (12) s'étendant le long de la circonférence externe de la partie interne (22) et/ou le long de la circonférence interne de la partie externe (42) de l'outil (3, 4, 34, 35, 41) ou au moins un coussin d'air (12) s'étendant le long d'une section respective de la circonférence interne et/ou externe, dans lequel l'actionneur (13, 38) ou au moins un des actionneurs (13, 38) est conçu pour gonfler le ou les coussins d'air (12).

2. Outil selon la revendication 1, **caractérisé en ce que** le coussin d'air respectif (12) est fixé sur une circonférence interne ou externe (33) d'une structure de support (29) de l'outil (3, 4, 34, 35, 41), dans lequel l'outil (3, 4, 34, 35, 41) comprend un mécanisme (30) pour modifier le diamètre de cette circonférence (33).

3. Outil selon l'une des revendications précédentes, **caractérisé en ce qu'**il comprend de multiples lacets mobiles (37) répartis le long d'une circonférence externe de la partie interne (22) et/ou d'une circonférence interne de la partie externe (42) de l'outil (3, 4, 34, 35, 41), dans lequel une activation de l'actionneur (13, 38) ou au moins d'un des actionneurs (13, 38) déplace les lacets mobiles (37) radialement vers l'extérieur ou vers l'intérieur.

4. Outil selon la revendication 3, **caractérisé en ce que** l'outil (3, 4, 34, 35, 41) comprend plusieurs lacets fixes (6), formant chacun un étau en liaison avec l'un des lacets mobiles (37) pour fixer la paroi (16) de la section (5).

5. Outil selon l'une des revendications précédentes, **caractérisé en ce qu'**il comprend une butée (10) conçue pour limiter la profondeur de l'insertion de la partie interne (22) de l'outil (3, 4, 34, 35, 41) dans la section (5) et/ou de l'insertion de la section (5) dans la partie externe (42) de l'outil (3, 4, 34, 35, 41) .

6. Véhicule de transport pour le transport d'une section (5) d'une éolienne, **caractérisé en ce qu'**il comprend au moins un outil (3, 4, 34, 35, 41) selon l'une des revendications précédentes.

7. Véhicule de transport selon la revendication 6, **caractérisé en ce qu'**il comprend un mécanisme de levage (17) pour soulever verticalement l'outil (3, 4, 34, 35, 41) et donc la section (5) de l'éolienne depuis une position de chargement vers une position de transport (27) utilisée lors du transport.

8. Procédé de manipulation d'une section (5) d'une éolienne, comprenant les étapes :
- insérer une partie interne (22) d'un premier outil (3, 4, 34, 35, 41) dans une première extrémité ouverte (8, 9) de la section (5) et/ou insérer la première extrémité (8, 9) de la section (5) dans une partie externe (42) du premier outil (3, 4, 34, 35, 41),
- actionner le premier outil (3, 4, 34, 35, 41) pour exercer une pression sur une surface interne (15) et/ou une surface externe (23) d'une paroi (16) de la section (5) sur toute la circonférence ou dans de multiples zones (36) espacées le long de la circonférence de la paroi (16), et
- déplacer le premier outil (3, 4, 34, 35, 41) tandis que le premier outil (3, 4, 34, 35, 41) exerce la pression sur la surface interne et/ou externe (15, 23) pour déplacer la section (5),
**caractérisé en ce qu'**un outil selon l'une des revendications 1 à 5 est utilisé comme premier outil (3, 4, 34, 35, 41).

9. Procédé selon la revendication 8, **caractérisé en ce qu'**avant de déplacer le premier outil (3, 4, 34, 35, 41), une partie interne (22) d'un deuxième outil (3, 4, 34, 35, 41) est insérée dans une deuxième extrémité ouverte (8, 9) de la section (5) et/ou la deuxième extrémité (8, 9) de la section (5) est insérée dans une partie externe (42) du deuxième outil (3, 4, 34, 35, 41) et le deuxième outil (3, 4, 34, 35, 41) est actionné pour exercer une pression sur une surface interne (15) et/ou une surface externe (23) de la paroi (16) de la section (5) le long de toute la circonférence ou dans de multiples zones (36) espacées le long de la circonférence de la paroi (16).

10. Procédé selon la revendication 9, **caractérisé en ce que** la section (5) s'étend horizontalement entre la première et la deuxième extrémité (8, 9) lors du déplacement de la section (5).

11. Procédé selon l'une des revendications 8 à 10, **caractérisé en ce que** le premier et/ou le deuxième outil (3, 4, 34, 35, 41) sont fixés à un véhicule de transport (1, 2) ou à un véhicule de transport respectif (1, 2) utilisé pour déplacer la section (5) le long d'un chemin de transport (28).
